# EUROPÄISCHE PATENTSCHRIFT

(11) **EP 4 426 458 B1**
(45) Veröffentlichungstag und Bekanntmachung des Hinweises auf die Patenterteilung: **17.12.2025**
(21) Anmeldenummer: 22813906.9
(22) Anmeldetag: 02.11.2022
(51) Int. Cl.: B01D 25/164, B01D 25/32

(54) **VERFAHREN UND FILTERPRESSE ZUR HERSTELLUNG VON PELLETS AUS EINER PARTIKELBELADENEN FLÜSSIGKEIT SOWIE ANLAGE ZUR HERSTELLUNG VON PELLETS**
METHOD AND FILTER PRESS FOR PRODUCING PELLETS FROM A PARTICLE-LADEN LIQUID, AND PLANT FOR PRODUCING PELLETS
PROCÉDÉ ET FILTRE-PRESSE POUR LA PRODUCTION DE GRANULÉS À PARTIR D'UN LIQUIDE CHARGÉ DE PARTICULES, ET INSTALLATION DE PRODUCTION DE GRANULÉS

(30) Priorität: 03.11.2021 DE 102021128622
(43) Veröffentlichungstag der Anmeldung: 11.09.2024
(73) Patentinhaber: Innovative Technology GbR, 85625 Glonn (DE)
(72) Erfinder: ERATH, Edmund, 86643 Rennertshofen (DE)
(74) Vertreter: LBP Lemcke, Brommer & Partner Patentanwälte mbB
(86) Internationale Anmeldenummer: PCT/EP2022/080489
(87) Internationale Veröffentlichungsnummer: WO 2023/078888

(56) Entgegenhaltungen:
- EP-A1- 1 495 788
- EP-A2- 0 318 732
- CN-A- 112 044 127
- CN-A- 112 516 633

## Beschreibung

Die Erfindung betrifft ein Verfahren zur Herstellung von Pellets in einer Filterpresse nach dem Anspruch 1, eine Filterpresse zur Herstellung von Pellets nach dem Oberbegriff des Anspruchs 9 sowie eine Anlage zur Herstellung von Pellets nach Anspruch 14.

Zur Trennung von Partikel aus Flüssigkeiten werden neben Bandfilter und Trommelfilter auch Kammerfilterpressen eingesetzt. Bei einer Kammerfilterpresse handelt sich um eine Kuchenfiltration, mit der das zu filternde Medium zu einem Retentat mit ca. 40% bis 60% Feststoffgehalt aufkonzentriert wird. Dieser Prozess erfolgt jedoch diskontinuierlich, in dem zuerst das zu filternde Medium zur Bildung des Retentats über einen bestimmten Zeitraum oder bis zur Feststellung einer bestimmten Filtermöglichkeit der Kammerfilterpresse zugeleitet und anschließend die Kammerfilterpresse zur Lösung des Retentats geöffnet wird. Zur Lösung des Retentats müssen die einzelnen Filterplatten der Kammerfilterpresse mühsam entleert und gereinigt werden, um für den nächsten Pressvorgang einsatzbereit zu sein. Zudem wurde festgestellt, dass eine solche Kammerfilterpresse zwar anfangs zu Beginn des Prozesses eine hohe Filterleistung aufweist und somit eine große Anzahl an Partikel aus dem zu filternden Medium entfernen kann, diese Filterleistung jedoch sehr schnell auf Null zurückgeht, da sich auf einem Filtergewebe eine undurchlässige, nacht mehr drainagefähige Schicht ausgebildet hat. Dies kann dann beispielsweise der Startpunkt zum Öffnen und Entleeren der Kammerfilterpresse darstellen.

Weiterhin ist es bei der Kuchenfiltration in Filterpressen bekannt, dass ein hoher Filterdruck auch mit einer hohen Filterleistung einhergeht. Dies ist jedoch nur kurzzeitig der Fall, denn bei einem höheren Filterdruck wird auf dem Filtergewebe der Filterpresse schnell eine hochverdichtete Schicht gebildet, welche dann nicht mehr drainagefähig ist. Im Extremfall bedeutet dies, dass man in einem ersten kurzen Zeitraum eine große Filterleistung erzielen kann, doch wenig später keine weitere Filterleistung durch die Bildung einer dünnen, drainageunfähigen Schicht mehr möglich ist. Diese Schicht ist insbesondere so stark komprimiert, dass kein Permeat mehr durch diese hindurchkommt. So kann es beispielsweise der Fall sein, dass nur eine geringe Filterleistung insgesamt erzielt werden kann, da die Filterpresse bereits nach kurzer Zeit nicht mehr drainagefähig ist. Die Filterpresse muss somit geöffnet und das Filtergewebe gereinigt werden.

Aus der US 5,618,423 ist beispielsweise eine Rotationsfiltersiebvorrichtung bekannt, bei welcher Fremdstoffe aus einem zu filternden Medium mittels einer Trommel in einem kontinuierlichen Betrieb entfernt werden können. Diese Rotationsfiltersiebvorrichtung erlaubt zwar einen kontinuierlichen Betrieb der Vorrichtung, ohne dass hierbei zur Reinigung von Filtersieben der Betrieb angehalten werden muss. Allerdings werden die Partikel lediglich mittels eines Rückstandsentfernungsstabes aus der Anlage entnommen. Insbesondere die Weiterverarbeitung des Retentats, beispielsweise zur Herstellung von Pellets, ist nicht möglich.

Die EP 1 495 788 A1 offenbart eine Filtervorrichtung in der Art eines Kammerfilters mit einem Deckelmodul und einem Bodenmodul sowie dazwischen angeordneten Kammern mit einem Filtermittel, wobei die Filtervorrichtung eines Suspensionszuleitung, eine Suspensionsableitung sowie eine Filtratableitung umfasst und wobei über eine Gaszuführleitung ein Gas in das Innerer der Filtervorrichtung eingeleitet werden kann.

Die CN 112 516 633 A1 offenbart eine druckluftbetriebene Filterpresse, die einen Hauptträger, eine Druckplatte und eine auf dem Hauptträger angeordnete Pressplatte umfasst, wobei die Pressplatte mit einer hydraulischen Antriebsvorrichtung verbunden ist, wobei eine Gruppe von Kammerfilterplatten und/oder Membranfilterplatten zwischen der Druckplatte und der Pressplatte angeordnet ist und wobei die Kammerfilterplatten eine Kernplatte und ein Filtertuch umfassen.

Es ist die Aufgabe der vorliegenden Erfindung ein Verfahren und eine Filterpresse sowie eine Anlage zur Herstellung von Pellets anzugeben, mittels welchen Pellets in wirtschaftlicher Weise hergestellt werden können.

Es ist eine weitere Aufgabe der vorliegenden Erfindung ein Verfahren und eine Filterpresse zur Herstellung von Pellets anzugeben, welche die Herstellung in einem kontinuierlichen Betrieb und insbesondere in einer kompakten Vorrichtung erlaubt.

Gelöst wird diese und weitere Aufgaben durch ein Verfahren zur Herstellung von Pellets nach Anspruchs 1 und eine Filterpresse nach Anspruch 11 sowie eine Anlage nach Anspruch 16.

Vorteilhafte Ausgestaltungsformen des Verfahrens finden sich in den Ansprüchen 2 bis 8, vorteilhafte Ausgestaltungsformen der Filterpresse sind in den Ansprüchen 10 bis 13 dargelegt. Eine vorteilhafte Ausgestaltungsform der Anlage ist in Anspruch 15 dargelegt.

Das erfindungsgemäße Verfahren ist insbesondere zum Ausführen mittels einer erfindungsgemäßen Filterpresse oder einer bevorzugten Ausführungsform hiervon ausgebildet. Die erfindungsgemäße Filterpresse ist insbesondere zur Durchführung eines erfindungsgemäßen Verfahrens oder einer bevorzugten Ausführungsform hiervon ausgebildet.

Eine Lösung der Aufgaben ist gegeben durch ein Verfahren zur Herstellung von Pellets in einer Filterpresse aus einer partikelbeladenen Flüssigkeit, umfassend die folgenden Schritte:
A) Einleiten der partikelbeladenen Flüssigkeit über eine Zuleitung in eine Filterkammer;
B) Beaufschlagen der Filterkammer mit einem Vordruck, wodurch aus der partikelbeladenen Flüssigkeit ein Retentat an einem Filtergewebe in der Filterkammer zurückgehalten wird und ein Permeat einer Ableitung zugeleitet wird;
C) Lösen des Vordrucks auf die Filterkammer und Rückspülen zumindest eines Teils des Permeats aus der Ableitung in die Filterkammer;
D) Widerholen der Schritte A) bis C) solange bis ein Filterkuchen aus den Retentat in der Filterkammer erzielt ist;
E) Pressen des Filterkuchens zu einem Pellet durch Beaufschlagen der Filterkammer mit einem Hauptdruck und Entfernen des Pellet aus der Filterkammer.

Durch das Rückspülen eines Teils des Permeats in die Filterkammer wird das Retentat und insbesondere die Partikel des Retentats von dem Filtergewebe gelöst, so dass dieses wiederum drainagefähig ist. Die Partikel des Retentats platzen durch das Rückspülen von dem Filtergewebe ab, so dass dieses wieder drainagefähig wird und verbleiben in der Filterkammer. Mittels Verfahrensschritt D) wird ein Gehalt an Partikeln im Retentat in jedem Zyklus angereichert, so dass sich ein entsprechender Filterkuchen bilden kann, welcher dann zum Pellet gepresst wird. Nach dem Entfernen des Pellet ist die Filterpresse sofort wieder einsatzbereit, da ein mühsames Reinigen des Filtergewebes entfällt und der Pellet einfach ausgestoßen wird. Somit wird insbesondere ein kontinuierlicher Betrieb der Filterpresse ermöglich.

Bei einer partikelbeladenen Flüssigkeit handelt es sich um ein Medium, welches Feststoffe in Form von Partikeln enthält. Die kann beispielsweise ein zu filterndes Bier oder Gülle sein.

Das Entfernen des Pellet aus der Filterkammer erfolgt insbesondere durch Ausstoßen des Pellet aus der Filterkammer, insbesondere in einen Auffangbehälter oder ähnliches.

Bei dem Filtergewebe handelt es sich bevorzugt um ein Edelstahlgewebe, dessen Maschenweite insbesondere im Bereich von µm liegt. Die Wahl des Filtergewebes hängt insbesondere von der partikelbeladenen Flüssigkeit, der Größe und/oder der Größenverteilung der Partikel in der partikelbeladenen Flüssigkeit und von dem jeweiligen Einsatzgebiet de Filterpresse ab.

Bei einem Pellet handelt es sich insbesondere um ein eher zylindrisches Objekt, dessen Durchmesser bis zu 10 cm, insbesondere ca. 6 cm beträgt. Bedarfsweise kann der Durchmesser auch größer sein. Die Höhe bzw. Breite des gepressten Pellet liegt im Bereich von 0,5 cm bis 1,5 cm, bevorzugt bei ca. 1 cm. Die Größe und Form des Pellet wird insbesondere durch die Größe der Filterkammer bestimmt. Insbesondere kann es sich bei dem Pellet auch um ein Plättchen oder plättchenförmiges Gebilde handeln. Der Pellet ist insgesamt jedoch sehr handlich und transportfähig.

Vorzugsweise wird die partikelbeladene Flüssigkeit langsam, insbesondere mit einem geringen Filterdruck, in die Filterkammer eingeleitet, so dass das Filtergewebe während der Zuführung von partikelbeladener Flüssigkeit in die Filterkammer lange drainagefähig bleibt. Durch das langsame Zuführen und einen entsprechend geringen Filterdruck wird vermieden, dass sich schnell eine drainageunfähige Schicht geringer Dicke an dem Filtergewebe bildet. Somit ermöglicht das langsame Zuführen mit einem geringen Filterdruck, beispielsweise über eine Minute, dass mehr Partikel aus der partikelbeladenen Flüssigkeit entfernt werden können und der Gehalt an Partikeln im Retentat in der Filterkammer schneller erhöht wird.

Vorzugsweise wird die Zuleitung von partikelbeladener Flüssigkeit in Verfahrensschritt C) unterbrochen und nach dem Rückspülen wieder aufgenommen.

Ein bevorzugte Ausführungsform zeichnet aus, dass die partikelbeladene Flüssigkeit ein Gehalt an Partikeln von zumindest 10%, bevorzugt von zumindest 12%, besonders bevorzugt von zumindest 15% aufweist. Insbesondere wurde der Gehalt an Partikeln in der partikelbeladenen Flüssigkeit vor der Filterpresse mittels einer oszillierenden Membranfilterpumpe, wie sie beispielsweise aus der DE 10 2016 003 335 A1 bekannt ist, erhöht. Durch einen erhöhten Gehalt an Partikeln in der partikelbeladenen Flüssigkeit wird der Prozess zur Herstellung des Filterkuchens in der Filterkammer beschleunigt, wodurch mehr Pellets in einem Zeitintervall hergestellt werden können.

Vorzugsweise werden die Verfahrensschritt A) bis C) in Ihrer Reihenfolge zumindest 10-mal, bevorzugt zumindest 20-mal, besonders bevorzugt zumindest 30-mal durchgeführt. Durch ein mehrmaliges Wiederholen wird der Gehalt an Partikeln im Retentat von Wiederholung zu Wiederholung erhöht, so dass sich über die Zeit ein immer dicker werdender Filterkuchen aufbaut.

Vorzugsweise wird das Zuleiten von partikelbeladener Flüssigkeit und Rückspülen von Permeat im Minutentakt wiederholt. Alternativ oder vorzugsweise ergänzend können die Wiederholungen der Schritte von Zuleiten einer partikelbeladenen Flüssigkeit und Rückspülen von Permeat auch schneller, beispielsweise nach 10 Sekunden oder 30 Sekunden erfolgen. Insbesondere kann das Intervall von der Drainagefähigkeit des Filtergewebes abhängen und von Zyklus zu Zyklus variieren.

Eine bevorzugte Ausführungsform zeichnet aus, dass das Rückspülen von Permeat impulsartig erfolgt. Vorzugsweise erfolgt das impulsartige Rückspülen durch Beaufschlagung der Ableitung mit Druckluft, insbesondere mit einem Druckluftimpuls. Durch das impulsartige Rückspülen wird das Retentat von dem Filtergewebe gelöst, so dass dieses für den nächsten Vorgang bzw. Zyklus wieder durchlässig für das Permeat ist. Mittels Druckluft kann dies besonders einfach und effektiv erfolgen. Insbesondere kann schnell ein hoher Druck und somit ein starker Impuls erzeugt werden.

In einer bevorzugten Ausführungsform wird die Ableitung vor dem Rückspülen mittels eines Ventils abgesperrt, wobei vorzugsweise die Druckluft in die Ableitung zwischen Filterkammer und Ventil eingeblassen wird. Durch das Ventil kann zum einen die Menge an Permeat in der Ableitung zwischen Filterkammer und Ventil begrenzt werden, so dass keine zu große Menge an Permeat in die Filterkammer zurückgespült wird. Weiterhin wird durch das Ventil erreicht, dass der Rückspülimpuls zielgerichtet in die Filterkammer und durch das Filtergewebe geleitet wird und nicht in der Ableitung verpufft.

Vorzugsweise wird die partikelbeladene Flüssigkeit über zumindest zwei Eingänge in die Filterkammer eingeleitet, wobei bevorzugt die Eingänge gegenüberliegend angeordnet sind. Durch die zwei Eingänge kann homogen und in großer Menge die partikelbeladene Flüssigkeit, insbesondere mit einem geringen Filterdruck, in die Filterkammer eingeleitet werden. Hierdurch kann der Durchsatz erhöht werden.

Alternativ oder vorzugsweise ergänzend wird das Permeat über zumindest zwei Ausgänge aus der Filterkammer abgeleitet, wobei bevorzugt die Ausgänge gegenüberliegend angeordnet sind. Durch die erhöhte Anzahl an Ausgängen kann das Permeat schneller aus der Filterkammer in die Ableitung ablaufen, wodurch der Prozess beschleunigt wird.

Eine bevorzugte Ausführungsform zeichnet aus, dass der Filterkuchen zumindest eine Stärke von 10 mm, bevorzugt eine Stärke von zumindest 20 mm, besonders bevorzugt eine Stärke von zumindest 30 mm aufweist. Erst bei einer Stärke des Filterkuchens von zumindest 10 mm können entsprechende Pellets gepresst werden. Durch das Aufbringen des Hauptdrucks wird der Filterkuchen weiter komprimiert, wodurch beispielsweise aus einem Filterkuchen mit 30 mm Stärke ein Pellet mit einer Stärke bzw. Höhe von ca. 1 cm entsteht. Sofern die gewünschte Stärke des Filterkuchens oder des Pellet nicht erreicht wird, werden die Verfahrensschritte A) bis C) wiederholt bis der Filterkuchen bzw. das Pellet eine entsprechende Stärke aufweist.

Alternativ oder vorzugsweise ergänzend wird die Stärke des Filterkuchens gemessen oder ermittelt, insbesondere über einen Gegendruck bei Beaufschlagung der Filterkammer mit einem Vordruck. Eine Messung der Stärke des Filterkuchens kann unmittelbar durch eine Distanzmessung für die Breite der Filterkammer erfolgen. Insbesondere jedoch erfolgt eine Ermittlung der Stärke des Filterkuchens über die Bestimmung des Gegendrucks bei der Beaufschlagung der Filterkammer mit Vordruck. Je stärker der Filterkuchen ausgebildet ist, desto stärker ist auch der Gegendruck ausgebildet, so dass eine entsprechende Stärkenermittlung ermöglicht wird.

Vorzugsweise beträgt eine Restfeuchte des Pellet nach dem Pressen in Verfahrensschritt E) kleiner oder gleich 25%. Somit wird eine geringe Restfeuchte des Pellet bei der weiteren Verarbeitung sichergestellt. Sofern die gewünschte Restfeuchte nicht erzielt wird, kann dies dazu führen, dass die Verfahrensschritte A) bis C) einmalig oder mehrmalig wiederholt werden. Alternativ oder vorzugsweise ergänzend kann auch der Hauptdruck erhöht werden.

Eine bevorzugte Ausführungsform zeichnet aus, dass vor dem Entfernen des Pellet aus der Filterkammer die Filterkammer, bevorzugt über die Zuleitung, mit Druckluft beaufschlagt wird, insbesondere für eine Dauer von zumindest 10 Sekunden, bevorzugt von zumindest 20 Sekunden, besonders bevorzugt von zumindest 30 Sekunden. Vorzugsweise wird hierfür die Zuleitung für die partikelbeladene Flüssigkeit mittels eines Ventils zur Absperrung der Zuleitung abgesperrt. Insbesondere erfolgt die Beaufschlagung mit Druckluft von der Zuleitung aus, so dass überschüssiges Permeat in die Ableitung abgeleitet wird. Durch das Beaufschlagen der Filterkammer mit Druckluft vor dem Entfernen des Pellet wird das erzeugte Pellet getrocknet.

Vorzugsweise erfolgt das Beaufschlagen der Filterkammer mit dem Vordruck und Hauptdruck mittels einer Presseinrichtung in Form zumindest eines Druckzylinders, bevorzugt durch zumindest zwei Druckzylinder, welche vorzugsweise gegenüberliegend angeordnet sind. Insbesondere handelt es sich bei dem zumindest einen Druckzylinder um einen pneumatischen oder hydraulischen Druckzylinder. Dies erlaubt es den Vordruck wie auch den Hauptdruck gleichmäßig aufzubauen und, insbesondere bei der Verwendung von hydraulischen Druckzylindern, höhere Drücke in der Filterkammer zu erzeugen und über einen bestimmten Zeitraum bestehen zu lassen.

Der Hauptdruck, der Vordruck, die Stärke des Filterkuchens und/oder des Pellet, eine Fließgeschwindigkeit und/oder ein Filterdruck der partikelbeladenen Flüssigkeit und/oder des Permeats werden vorzugsweise mittels Sensoren ermittelt. Dies erlaubt es stets einen Überblick des aktuellen Status des Verfahrens und/oder der Filterpresse zu haben.

Der Ablauf des Verfahrens wird bevorzugt mittels einer Steuereinrichtung gesteuert oder geregelt. Vorzugsweise kann das Verfahren mittels der Steuereinrichtung automatisiert ablaufen. Insbesondere handelt es sich um eine intelligente Steuereinrichtung, welche beispielsweise die Anzahl der Wiederholungen des Verfahrensschritte A) bis C) solange wiederholt, bis eine bestimmte Stärke des Filterkuchens erreicht ist. Hierbei können sich die Anzahl der Zyklen der Verfahrensschritte A) bis C) von Filterkuchen zu Filterkuchen bzw. für ein Pellet in Abhängigkeit des Gehalts an Partikeln in der partikelbeladenen Flüssigkeit, eines Volumenstroms an partikelbeladener Flüssigkeit, einer Drainagefähigkeit des Filtergewebes oder anderer Faktoren variieren.

Vorzugsweise wird zum Entfernen des Pellet aus der Filterkammer ein Druck des zumindest einen Schließ-Zylinders, bevorzugt der zumindest zwei Schließ-Zylinder, welche vorzugsweise gegenüberliegend angeordnet sind, gelöst. Durch den zumindest einen Schließ-Zylinder wird ein einfaches und sicheres Entfernen des Pellet ermöglicht.

Vorzugsweise wird die Filterkammer durch Ausüben eines Drucks des zumindest einen Schließ-Zylinders gegenüber der Umgebung abgedichtet. Bevorzugt handelt es sich bei dem zumindest einen Schließ-Zylinder um einen hydraulischen oder pneumatischen Schließ-Zylinder.

Eine weitere Lösung der Aufgabe und weiterer Aufgaben ist gegeben durch Filterpresse zur Herstellung von Pellets aus einer partikelbeladenen Flüssigkeit, mit einer Filterkammer, mit zumindest einer Zuleitung zur Zuleitung der partikelbeladenen Flüssigkeit in die Filterkammer, mit zumindest einer Ableitung zur Ableitung eines Permeats aus der Filterkammer, wobei die Filterkammer ein Filtergewebe umfasst, welches vor der Ableitung angeordnet ist, und mit einer Pressvorrichtung zum Beaufschlagen der Filterkammer mit einem Druck. Wesentlich ist, dass in der Ableitung eine Einrichtung zum Rückspülen von Permeat in die Filterkammer angeordnet oder mit dieser wirkverbunden ist.

Durch die Einrichtung zum Rückspülen wird Permeat aus der Ableitung in die Filterkammer geleitet und am Filtergewebe anhaftende Partikel des Retentats gelöst, so dass dieses wiederum drainagefähig wird.

Vorzugsweise umfasst die Filterpresse eine Steuereinrichtung, welche dazu ausgebildet ist nach dem Rückspülen von Permeat wieder partikelbeladene Flüssigkeit in die Filterkammer einzuleiten. So kann der Prozess von Zuleiten und Rückspülen mehrfach wiederholt werden, wodurch ein Gehalt an Partikeln im Retentat in der Filterkammer nach und nach erhöht wird.

Vorzugsweise ist die Einrichtung zum Rückspülen zum Einleiten eines Rückspülimpulses ausgebildet. Durch den Rückspülimpuls können die Partikel des Retentats besonders effektiv von dem Filtergewebe gelöst werden.

Eine bevorzugte Ausführungsform zeichnet aus, dass die Einrichtung zum Rückspülen durch einen Anschluss für Druckluft gebildet ist, über welchen die Ableitung mit Druckluft beaufschlagbar ist. Mittels Druckluft kann insbesondere ein kurzer und vor allem starker Rückspülimpuls ausgebildet werden. Zudem erlaubt die Druckluft schnell einen hohen Druck auf das Permeat auszuüben und ist schnell verfügbar.

Alternativ oder vorzugsweise ergänzend umfasst die Einrichtung zum Rückspülen ein Ventil zum Absperren der Ableitung, wobei vorzugsweise der Anschluss für Druckluft zwischen der Filterkammer und dem Ventil angeordnet ist. Mittels des Ventils zum Absperren der Ableitung wird sichergestellt, dass zum einen eine geringe, aber ausreichende Menge an Permeat zum Rückspülen zur Verfügung steht und dass das Rückspülen durch das Filtergewebe in die Filterkammer hinein erfolgt. Insbesondere kann durch das Ventil zum Absperren der Rückspülimpuls nicht in der Ableitung verpuffen.

Vorzugsweise ist die Presseinrichtung durch zumindest einen Druckzylinder gebildet ist. In einer bevorzugten Ausführungsform ist die Presseinrichtung durch zumindest zwei Druckzylinder gebildet, welche vorzugsweise auf gegenüberliegenden Seiten der Filterkammer angeordnet sind.

Gemäß einer bevorzugten Ausführungsform ist der zumindest eine Druckzylinder ein pneumatischer und/oder hydraulischer Druckzylinder. Diese erlauben es einen besonders hohen Druck auf das Retentat, den Filterkuchen und/oder das Pellet auszuüben, insbesondere einen hohen Hauptdruck.

Vorzugsweise weist die Filterkammer zumindest zwei Eingänge zum Einleiten der partikelbeladenen Flüssigkeit auf. Der Filterkammer kann somit gleichmäßiger und schneller die partikelbeladene Flüssigkeit zugeleitet werden. Vorzugsweise erfolgt die Zuleitung von partikelbeladener Flüssigkeit mit einem geringen Filterdruck.

Alternativ oder vorzugsweise ergänzend weist die Filterkammer zumindest zwei Ausgänge zur Ableitung des Permeats auf. Somit kann das Permeat schneller aus der Filterkammer abgeleitet werden.

Vorzugsweise weist die Zuleitung einen Anschluss für Druckluft auf, über welchen die Zuleitung mit Druckluft beaufschlagbar ist. Der Anschluss für Druckluft in der Zuleitung weist weiter insbesondere ein Ventil, bevorzugt ein steuerbares oder regelbares Ventil auf. So kann die Zuleitung von Druckluft entsprechend gesteuert oder geregelt werden.

Bevorzugt ist in der zumindest einen Zuleitung für partikelbeladene Flüssigkeit ein Ventil zum Absperren der Zuführung an partikelbeladener Flüssigkeit angeordnet. Somit kann die Zuleitung an partikelbeladener Flüssigkeit in die Filterkammer bedarfsweise unterbrochen werden, beispielsweise beim Pressen des Filterkuchens zu einem Pellet.

Eine weitere Lösung der Aufgabe sowie von weiteren Aufgaben ist gegeben durch eine Anlage zur Herstellung von Pellets, umfassend zumindest zwei, bevorzugt zumindest fünf, besonders bevorzugt zumindest zehn, höchst bevorzugt zumindest zwanzig Filterpressen wie vorstehend dargelegt, insbesondere eine bevorzugte Ausführungsform hiervon. Mittels einer entsprechenden Anlage kann der Durchsatz an Pellet pro Zeiteinheit erhöht werden. Insbesondere ist eine solche Anlage in einem bestimmten Rahmen skalierbar und insbesondere auch nachträglich durch weitere Filterpressen wie vorstehend dargelegt erweiterbar.

Vorzugsweise umfasst die Anlage für jeweils zwei Filterpressen ein Doppelmodul, bevorzugt zwei Doppelmodule, einer oszillierenden Membranfilterpumpe, welche die Filterpressen mit einer partikelbeladenen Flüssigkeit versorgt. Die Membranfilterpumpe ist insbesondere entsprechend der DE 10 2016 003 335 A1 ausgeführt.

Weitere Vorteile und Eigenschaften der vorliegenden Erfindung ergeben sich aus der nachfolgenden Beschreibung eines Ausführungsbeispiels anhand der Figuren. Es zeigen:
- Figur 1: eine schematische Schnittansicht einer erfindungsgemäßen Filterpresse; und
- Figuren 2a) bis 2e): verschiedene Zustände der Filterpresse während des Verfahrens zur Herstellung von Pellets.

Im Folgenden werden gleiche oder gleichwirkende Teile mit gleichen Bezugszeichen bezeichnet.

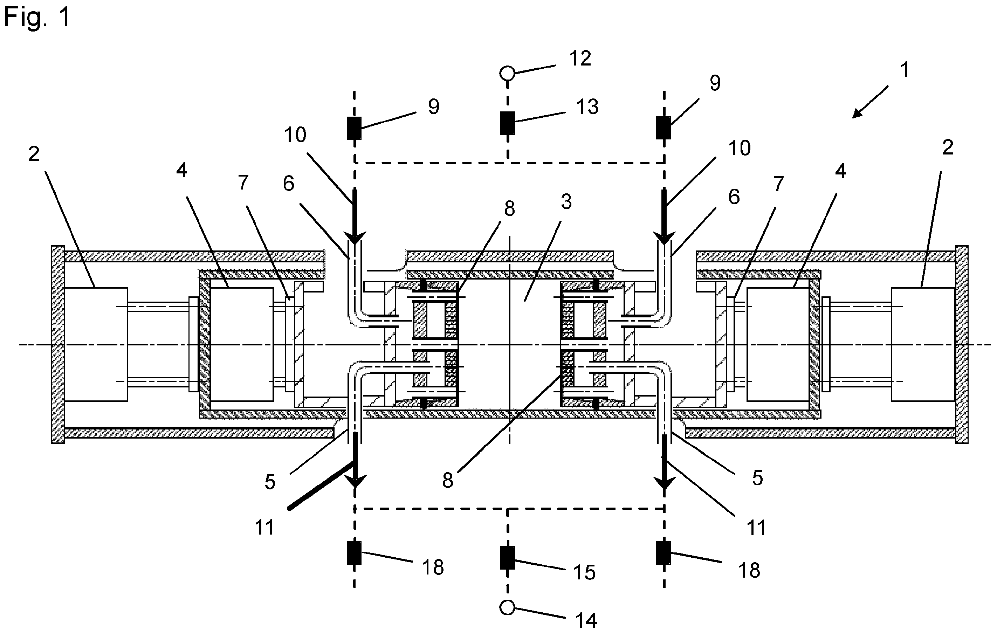

In Figur 1 ist eine erfindungsgemäße Filterpresse 1 zur Herstellung von Pellets 16 dargestellt. Die Filterpresse 1 befindet sich in einem geschlossenen Zustand, in welchem die Filterkammer 3 der Filterpresse 1 geschlossen und gegenüber der Umgebung abgedichtet ist. Hierzu üben die Schließ-Zylinder 2, welche jeweils gegenüberliegend der Filterkammer 3 angeordnet sind, einen entsprechenden Druck aus. Zum Öffnen der Filterpresse 1 und insbesondere der Filterkammer 3 zum Ausstoßen eines Pellet 16 wird der Druck der Schließ-Zylinder 2, welche vorliegend als pneumatische Zylinder ausgeführt sind, gelöst.

Die Filterkammer 3 weist einen zylindrischen Querschnitt, dessen Durchmesser etwa 6 cm beträgt. Der Durchmesser der Filterkammer 3 erstreckt sich in Figur 1 von einer Unterseite zu einer Oberseite der Filterkammer 3.

Über zwei Zuleitungen 6, welche symmetrisch zu der Filterkammer 3 angeordnet sind, wird eine partikelbeladene Flüssigkeit 10 in die Filterkammer 3 eingeleitet. Die partikelbeladene Flüssigkeit 10 wird über 2 Eingänge in die Filterkammer 3 eingeleitet. In der Zuleitung 6 ist weiter ein Anschluss 12 für Druckluft angeordnet, welcher mittels eines Ventils 13 von der Zuleitung 6 abgetrennt ist. Der Anschluss 12 ist dabei so ausgebildet, dass dieser über eine Verbindung mit beiden Zuleitungen 6 verbunden ist.

Zum Einleiten von partikelbeladener Flüssigkeit 10 in die Filterkammer 3 werden die Ventile 9 in der Zuleitung 6 geöffnet. Die partikelbeladene Flüssigkeit 10 fließt mit einer vorbestimmten Fließgeschwindigkeit oder einem bestimmten Volumenstrom über die Eingänge in die Filterkammer 3 ein. Die partikelbeladene Flüssigkeit 10 läuft insbesondere langsam mit einem geringen Filterdruck in die Filterkammer 3 ein. Der Gehalt an Partikel in der partikelbeladenen Flüssigkeit 10 liegt insbesondere im Bereich von 8% bis 15%, vorliegend bei etwa 10%. Insbesondere entstammt die partikelbeladene Flüssigkeit 10 einer oszillierenden Membranfilterpumpe, wie diese beispielsweise aus der DE 10 2016 003 335 A1 bekannt ist.

Mittels eines Filtergewebes 8, welches vorliegend als ein Edelstahlgewebe mit einer Maschenweite von etwa 10 µm ausgeführt ist, werden Partikel aus der partikelbeladenen Flüssigkeit 10 in der Filterkammer 3 zur Bildung eines Retentats 7 zurückgehalten. Ein Permeat 11, welches im Wesentlichen aus einer Flüssigkeit gebildet wird, wird durch das Filtergewebe 8 hindurchgeleitet und über zwei Ausgänge aus der Filterkammer 3 in die Ableitungen 5 abgeleitet.

Zur Bildung des Retentats 7 in der Filterkammer 3 wird mittels Druckzylinder 4, welche beidseitig der Filterkammer 3 angeordnet sind, ein Vordruck auf das in der Filterkammer 3 befindliche Medium ausgeübt, so dass eine stärke Abtrennung von Partikeln aus der partikelbeladenen Flüssigkeit 10 erfolgt und das Permeat 11 der Ableitung 5 zugeleitet wird. Die Druckzylinder 4 sind vorliegend als pneumatische Druckzylinder 4 ausgeführt. Gleichzeitig werden die Ventile 9 geschlossen, so dass keine weitere partikelbeladene Flüssigkeit 10 in die Filterkammer 3 gelangt.

Die Ableitung 5 weist ebenfalls einen Anschluss 14 für Druckluft auf. Die Druckluft ist hierbei über ein Ventil 15 von der Ableitung 5 abgetrennt. Nach einer bestimmten Zeit oder bei Feststellung eines nur geringen Abflusses an Permeat 11 in der Ableitung 5 wird die Zufuhr an partikelbeladener Flüssigkeit 10 über die Zuleitungen 6 durch Schließen der Ventile 9 unterbrochen. Weiter wird auch der Vordruck der Druckzylinder 4 gelöst und die Ventile 18 in der Ableitung 5 geschlossen. Anschließend wird das Ventil 15 geöffnet und das in der Ableitung 5 zwischen Filterkammer 3 und Ventilen 18 befindliche Permeat 11 wird mittels eines Druckluftimpuls in die Filterkammer 3 zurückgespült. Durch das impulsartige Rückspülen des Permeats 11 werden die Partikel des Retentats 7 von dem Filtergewebe 8 gelöst, wodurch dieses wieder durchlässig wird. Nach dem Druckluftimpuls wird das Ventil 15 wieder geschlossen und die Ventile 18 geöffnet und über die Zuleitungen 6 wiederum partikelbeladene Flüssigkeit 10 in die Filterkammer 3 geleitet.

Durch den Vorgang des Zuleitens von partikelbeladener Flüssigkeit 10 und Rückspülen von Permeat 11 wird das Retentat 7 in der Filterkammer 3 angereichert, so dass dieses nach jedem Zyklus einen höheren Gehalt an Partikeln aufweist. Der Prozess wird solange wiederholt, bis sich ein entsprechender Filterkuchen aus dem Retentat 7 in der Filterkammer 3 ausgebildet hat. Bei Ausüben eines Vordruckes sollte der Filterkuchen etwa eine Stärke von 30 mm aufweisen.

Anschließend wird der Filterkuchen mit einem Hauptdruck beaufschlagt, um den Gehalt an Partikeln im Filterkuchen weiter zu erhöhen und ein entsprechendes Pellet 16 mit einer Restfeuchte kleiner 25% zu pressen. Der Hauptdruck ist größer als der Vordruck ausgebildet.

Nach erfolgter Herstellung des Pellets 16 wird dieses in der Filterkammer 3 getrocknet. Hierzu wird das Ventil 13 des Anschlusses 12 für Druckluft in der Zuleitung 6 geöffnet und für eine Dauer von ca. 30 Sekunden Druckluft in die Filterkammer 3 eingeblasen. Hierdurch wird weiter Flüssigkeit aus dem Pellet 16 gepresst und als Permeat 11 der Ableitung 5 zugeleitet.

Nach erfolgter Trocknung wird die Druckluftzufuhr in die Zuleitung 6 gestoppt und der Druck der Schließ-Zylinder 2 und der Druckzylinder 4 gelöst, so dass das Pellet 16 aus der Filterkammer 3 ausgeworfen wird. Anschließend wird die Filterkammer 3 wieder durch Druckbeaufschlagung der Schließ-Zylinder 2 gegenüber der Umgebung abgedichtet und erneut der Prozess zur Herstellung eines weiteren Pellet 16 fortgesetzt.

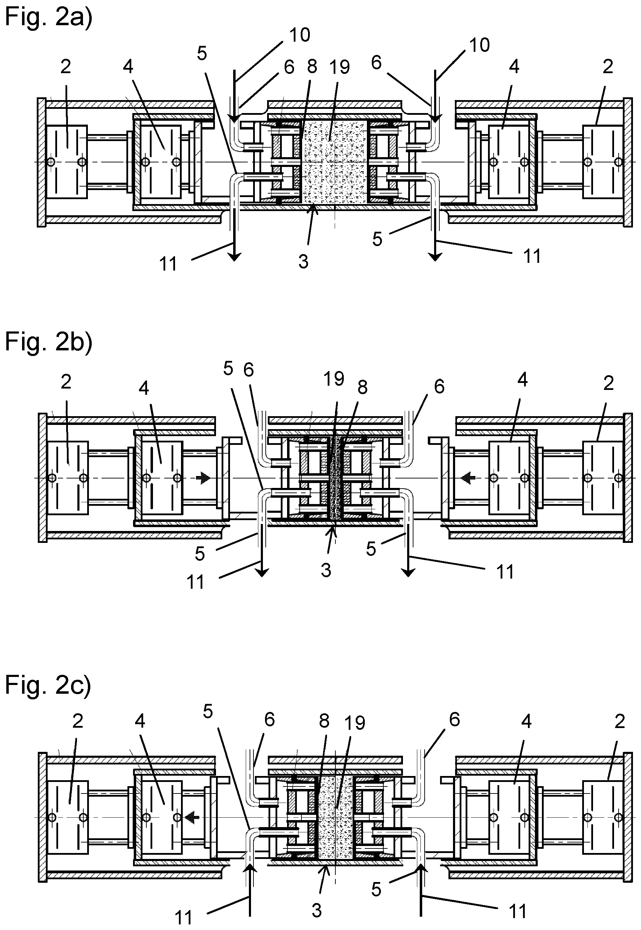

In den Figuren 2a) bis 2e) sind einzelne Phasen des Verfahrens nochmals separat angeführt. In Figur 2a) ist der Verfahrensschritt A) dargestellt, in welchem die partikelbeladene Flüssigkeit 10 der Filterkammer 3 zugeführt wird. Die Partikel der partikelbeladenen Flüssigkeit 10 werden am Filtergewebe 8 in der Filterkammer 3 gehalten, während das Permeat 11 der Ableitung 5 zugeführt wird.

In Figur 2b) ist der Verfahrensschritt B) dargestellt, in welchem nun ein Vordruck mittels der Druckzylinder 4 auf das Retentat 7 in der Filterkammer 3 ausgeübt wird, so dass weitere Flüssigkeit in Form von Permeat 11 der Ableitung 5 zugeführt wird und der Gehalt an Partikeln im Retentat 7 erhöht wird. Hierzu wird die Zuführung von partikelbeladener Flüssigkeit 10 über die Zuleitung 6 in die Filterkammer 3 mittels der Ventile 9 unterbrochen.

Nach Ausüben eines Vordrucks auf das Retentat 7 mittels der Druckzylinder 4 wird der Vordruck gelöst und es wird in einem Verfahrensschritt C) ein Rückspülimpuls über die Ableitung 5 eingeleitet, wie dies in Figur 2c) dargestellt ist. Hierdurch wird in der Ableitung befindliches Permeat 11 wieder in die Filterkammer zurückgespült, wodurch sich die an dem Filtergewebe 8 anhaftenden Partikel des Retentats 7 lösen. Das Filtergewebe 8 ist danach wieder durchlässig und drainagefähig.

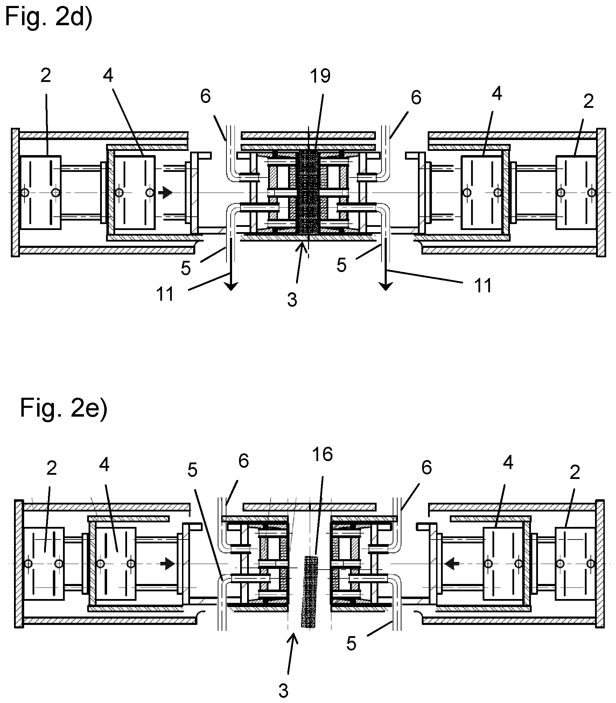

Anschließend werden die Verfahrensschritte, wie diese in den Figuren 2a) bis 2c) dargestellt sind und wie vorstehend dargelegt, so lange wiederholt bis sich ein entsprechender Filterkuchen aus dem Retentat 7 in der Filterkammer 3 gebildet hat. Dieser Filterkuchen wird anschließend mit einem Hauptdruck beaufschlagt, wie dies in Figur 2d) dargestellt ist, wodurch der Filterkuchen zu einem Pellet 16 gepresst wird, dessen Restfeuchte kleiner 25% beträgt.

Schließlich erfolgt noch das Ausstoßen des Pellet 16 aus der Filterkammer 3, in dem sowohl der Hauptdruck der Druckzylinder 4 als auch der Druck der Schließ-Zylinder 2 gelöst wird, wie in Figur 2e) dargestellt. Nach dem Ausstoßen des Pellet 16 aus der Filterkammer wird diese wieder geschlossen und das Verfahren zur Herstellung eines weiteren Pellet 16 beginnt von vorne.

### Bezugszeichenliste

- 1: Filterpresse
- 2: Schließ-Zylinder
- 3: Filterkammer
- 4: Druckzylinder
- 5: Ableitung
- 6: Zuleitung
- 7: Retentat
- 8: Filtergewebe
- 9: Ventil
- 10: partikelbeladene Flüssigkeit
- 11: Permeat
- 12: Anschluss
- 13: Ventil
- 14: Anschluss
- 15: Ventil
- 16: Pellet
- 17:
- 18: Ventil

## Patentansprüche

1. Verfahren zur Herstellung von Pellets (16) in einer Filterpresse (1) aus einer partikelbeladenen Flüssigkeit (10),
umfassend die folgenden Schritte:
A) Einleiten der partikelbeladenen Flüssigkeit (10) über eine Zuleitung (6) in eine Filterkammer (3);
B) Beaufschlagen der Filterkammer (3) mit einem Vordruck, wodurch aus der partikelbeladenen Flüssigkeit (10) ein Retentat (7) an einem Filtergewebe (8) in der Filterkammer (3) zurückgehalten wird und ein Permeat (11) einer Ableitung (5) zugeleitet wird;
C) Lösen des Vordrucks auf die Filterkammer (3) und Rückspülen zumindest eines Teils des Permeats (11) aus der Ableitung (5) in die Filterkammer (3);
D) Widerholen der Schritte A) bis C) solange bis ein Filterkuchen aus den Retentat (7) in der Filterkammer (3) erzielt ist;
E) Pressen des Filterkuchens zu einem Pellet (16) durch Beaufschlagen der Filterkammer (3) mit einem Hauptdruck und Entfernen des Pellet (16) aus der Filterkammer (3).

2. Verfahren nach Anspruch 1, **dadurch gekennzeichnet, dass** die partikelbeladene Flüssigkeit (10) ein Gehalt an Partikeln von zumindest 10%, bevorzugt von zumindest 12%, besonders bevorzugt von zumindest 15% aufweist, insbesondere dass der Gehalt an Partikeln in der partikelbeladenen Flüssigkeit (10) vor der Filterpresse (1) mittels einer oszillierenden Membranfilterpumpe erhöht wurde.

3. Verfahren nach einem der vorstehenden Ansprüche, **dadurch gekennzeichnet, dass** die Verfahrensschritt A) bis C) in Ihrer Reihenfolge zumindest 10-mal, bevorzugt zumindest 20-mal, besonders bevorzugt zumindest 30-mal durchgeführt werden.

4. Verfahren nach einem der vorstehenden Ansprüche, **dadurch gekennzeichnet, dass** das Rückspülen von Permeat (11) impulsartig erfolgt, vorzugsweise durch Beaufschlagung der Ableitung (5) mit Druckluft, insbesondere mit einem Druckluftimpuls und/oder
dass die Ableitung (5) vor dem Rückspülen mittels eines Ventils (18) abgesperrt wird, wobei vorzugsweise die Druckluft in die Ableitung (5) zwischen Filterkammer (3) und Ventil (18) eingeblassen wird.

5. Verfahren nach einem der vorstehenden Ansprüche, **dadurch gekennzeichnet, dass** die partikelbeladene Flüssigkeit (10) über zumindest zwei Eingänge in die Filterkammer (3) eingeleitet wird, wobei bevorzugt die Eingänge gegenüberliegend angeordnet sind, und/oder dass das Permeat (11) über zumindest zwei Ausgänge aus der Filterkammer (3) abgeleitet wird, wobei bevorzugt die Ausgänge gegenüberliegend angeordnet sind.

6. Verfahren nach einem der vorstehenden Ansprüche, **dadurch gekennzeichnet, dass** der Filterkuchen zumindest eine Stärke von 10 mm, bevorzugt eine Stärke von zumindest 20 mm, besonders bevorzugt eine Stärke von zumindest 30 mm aufweist und/oder dass die Stärke des Filterkuchens gemessen oder ermittelt wird, insbesondere über einen Gegendruck bei Beaufschlagung der Filterkammer (3) mit einem Vordruck, und/oder dass eine Restfeuchte des Pellet (16) nach dem Pressen in Verfahrensschritt E) kleiner oder gleich 25% beträgt.

7. Verfahren nach einem der vorstehenden Ansprüche, **dadurch gekennzeichnet, dass** vor dem Entfernen des Pellet (16) aus der Filterkammer (3) die Filterkammer (3), insbesondere über die Zuleitung (6), mit Druckluft beaufschlagt wird, insbesondere für eine Dauer von zumindest 10 Sekunden, bevorzugt von zumindest 20 Sekunden, besonders bevorzugt von zumindest 30 Sekunden.

8. Verfahren nach einem der vorstehenden Ansprüche, **dadurch gekennzeichnet, dass** das Beaufschlagen der Filterkammer (3) mit dem Vordruck und Hauptdruck mittels einer Presseinrichtung in Form zumindest eines Druckzylinders (4) erfolgt, insbesondere mittels eines pneumatischen oder hydraulischen Druckzylinders (4), wobei vorzugsweise das Beaufschlagen mittel seiner Presseinrichtung in Form von zumindest zwei Druckzylinder (4) erfolgt, welche bevorzugt gegenüberliegend angeordnet sind.

9. Filterpresse (1) zur Herstellung von Pellets (16) aus einer partikelbeladenen Flüssigkeit (10), insbesondere zur Durchführung eines Verfahrens nach einem der Ansprüche 1 bis 8,
mit einer Filterkammer (3),
mit zumindest einer Zuleitung (6) zur Zuleitung einer partikelbeladenen Flüssigkeit (10) in die Filterkammer (3);
mit zumindest einer Ableitung (5) zur Ableitung eines Permeats (11) aus der Filterkammer (3),
wobei die Filterkammer (3) ein Filtergewebe (8) umfasst, welches vor der Ableitung (5) angeordnet ist, und
mit einer Pressvorrichtung zum Beaufschlagen der Filterkammer (3) mit einem Druck,
**dadurch gekennzeichnet, dass**
in der Ableitung (5) eine Einrichtung zum Rückspülen von Permeat (11) in die Filterkammer (3) angeordnet oder mit der Ableitung (5) wirkverbunden ist.

10. Filterpresse (1) nach Anspruch 9, **dadurch gekennzeichnet, dass** die Einrichtung zum Rückspülen durch einen Anschluss (14) für Druckluft gebildet ist, über welchen die Ableitung (5) mit Druckluft beaufschlagbar ist und/oder dass die Einrichtung zum Rückspülen ein Ventil (18) zum Absperren der Ableitung (5) umfasst, wobei vorzugsweise der Anschluss (14) für Druckluft zwischen Filterkammer (3) und Ventil (18) angeordnet ist.

11. Filterpresse (1) nach einem der Ansprüche 9 oder 10, **dadurch gekennzeichnet, dass** die Presseinrichtung durch zumindest einen Druckzylinder (4) gebildet ist, bevorzugt durch zwei Druckzylinder (4), welche auf gegenüberliegenden Seiten der Filterkammer (3) angeordnet sind.

12. Filterpresse (1) nach Anspruch 11, **dadurch gekennzeichnet, dass** der Druckzylinder (4) ein pneumatischer und/oder hydraulischer Druckzylinder (4) ist.

13. Filterpresse (1) nach einem der Ansprüche 9 bis 12, **dadurch gekennzeichnet, dass** die Filterkammer (3) zumindest zwei Eingänge zum Einleiten der partikelbeladenen Flüssigkeit (10) aufweist und/oder zumindest zwei Ausgänge zur Ableitung des Permeats (11) aufweist.

14. Anlage zur Herstellung von Pellets (16), umfassend zumindest zwei, bevorzugt zumindest fünf, besonders bevorzugt zumindest zehn, höchst bevorzugt zumindest zwanzig Filterpressen (1) nach einem der Ansprüche 9 bis 13.

15. Anlage nach Anspruch 14, **dadurch gekennzeichnet, dass** die Anlage für jeweils zwei Filterpressen (1) ein Doppelmodul, bevorzugt zwei Doppelmodule einer oszillierenden Membranfilterpumpe, welche die Filterpressen (1) mit einer partikelbeladenen Flüssigkeit (10) versorgt, umfasst.

## Claims

1. Method for producing pellets (16) in a filter press (1) from a particle-laden liquid (10),
comprising the following steps:
A) introducing the particle-laden liquid (10) into a filter chamber (3) via a feed line (6),
B) applying a preliminary pressure to the filter chamber (3), whereby a retentate (7) from the particle-laden liquid (10) is retained on a filter fabric (8) in the filter chamber (3) and a permeate (11) is fed to a discharge line (5),
C) releasing the preliminary pressure on the filter chamber (3) and back-flushing at least a part of the permeate (11) from the discharge line (5) into the filter chamber (3),
D) repeating steps A) to C) until a filter cake is obtained from the retentate (7) in the filter chamber (3),
E) pressing the filter cake to form a pellet (16) by applying a main pressure to the filter chamber (3) and removing the pellet (16) from the filter chamber (3).

2. Method according to claim 1, **characterized in that** the particle-laden liquid (10) has a particle content of at least 10%, preferably of at least 12%, more preferably of at least 15%, in particular **in that** the particle content in the particle-laden liquid (10) upstream of the filter press (1) has been increased by means of an oscillating membrane filter pump.

3. Method according to any one of the preceding claims, **characterized in that** the method steps A) to C) are performed in their order at least 10 times, preferably at least 20 times, more preferably at least 30 times.

4. Method according to any one of the preceding claims, **characterized in that** back-flushing of permeate (11) takes place in a pulsed manner, preferably by applying compressed air to the discharge line (5), in particular with a pulse of compressed air and/or
**in that** the discharge line (5) is shut off by means of a valve (18) before back-flushing, wherein the compressed air is preferably blown into the discharge line (5) between the filter chamber (3) and the valve (18).

5. Method according to any one of the preceding claims, **characterized in that** the particle-laden liquid (10) is introduced into the filter chamber (3) via at least two inlets, wherein the inlets are preferably arranged opposite one another, and/or **in that** the permeate (11) is discharged from the filter chamber (3) via at least two outlets, wherein the outlets are preferably arranged opposite one another.

6. Method according to any one of the preceding claims, **characterized in that** the filter cake has at least a thickness of 10 mm, preferably a thickness of at least 20 mm, more preferably a thickness of at least 30 mm and/or **in that** the thickness of the filter cake is measured or determined, in particular via a counter-pressure when a preliminary pressure is applied to the filter chamber (3), and/or **in that** a residual moisture content of the pellet (16) after pressing in method step E) is less than or equal to 25%.

7. Method according to any one of the preceding claims, **characterized in that** before the pellet (16) is removed from the filter chamber (3), compressed air is applied to the filter chamber (3), in particular via the feed line (6), in particular for a duration of at least 10 seconds, preferably of at least 20 seconds, more preferably of at least 30 seconds.

8. Method according to any one of the preceding claims, **characterized in that** applying the preliminary pressure and main pressure to the filter chamber (3) takes place by means of a pressing device in the form of at least one pressure cylinder (4), in particular by means of a pneumatic or hydraulic pressure cylinder (4), wherein application preferably takes place by means of its pressing device in the form of at least two pressure cylinders (4), which are preferably arranged opposite one another.

9. Filter press (1) for producing pellets (16) from a particle-laden liquid (10), in particular for implementing a method according to any one of claims 1 to 8,
with a filter chamber (3),
with at least one feed line (6) for feeding a particle-laden liquid (10) into the filter chamber (3),
with at least one discharge line (5) for discharging a permeate (11) from the filter chamber (3),
wherein the filter chamber (3) comprises a filter fabric (8), which is arranged upstream of the discharge line (5), and
with a pressing device for applying pressure to the filter chamber (3),
**characterized in that**
an apparatus for back-flushing permeate (11) into the filter chamber (3) is arranged in the discharge line (5) or is operatively connected to the discharge line (5).

10. Filter press (1) according to claim 9, **characterized in that** the device for back-flushing is formed by a connection (14) for compressed air, via which compressed air can be applied to the discharge line (5) and/or **in that** the apparatus for back-flushing comprises a valve (18) for shutting off the discharge line (5), wherein the connection (14) for compressed air is preferably arranged between the filter chamber (3) and the valve (18).

11. Filter press (1) according to any one of claims 9 or 10, **characterized in that** the pressing device is formed by at least one pressure cylinder (4), preferably by two pressure cylinders (4), which are arranged on opposite sides of the filter chamber (3).

12. Filter press (1) according to claim 11, **characterized in that** the pressure cylinder (4) is a pneumatic and/or hydraulic pressure cylinder (4).

13. Filter press (1) according to any one of claims 9 to 12, **characterized in that** the filter chamber (3) has at least two inlets for introducing the particle-laden liquid (10) and/or at least two outlets for discharging the permeate (11).

14. System for producing pellets (16), comprising at least two, preferably at least five, more preferably at least ten, most preferably at least twenty filter presses (1) according to any one of claims 9 bis 13.

15. System according to claim 14, **characterized in that,** in each case, the system for two filter presses (1) comprises a double module, preferably two double modules of an oscillating membrane filter pump, which supplies the filter presses (1) with a particle-laden liquid (10).

## Revendications

1. Procédé de fabrication de granulés (16) dans un filtre-presse (1) à partir d'un liquide (10) chargé en particules,
comprenant les étapes suivantes :
A) l'introduction du liquide (10) chargé en particules par le biais d'une conduite d'alimentation (6) dans une chambre de filtration (3) ;
B) l'alimentation de la chambre de filtration (3) en une prépression, selon lequel un rétentat (7) est retenu à partir du liquide (10) chargé en particules au niveau d'un tissu filtrant (8) dans la chambre de filtration (3) et un perméat (11) est acheminé vers une conduite d'évacuation (5) ;
C) le relâchement de la prépression sur la chambre de filtration (3) et le rinçage à contre-courant au moins d'une partie du perméat (11) à partir de la conduite d'évacuation (5) dans la chambre de filtration (3) ;
D) la répétition des étapes A) à C) jusqu'à ce qu'un gâteau de filtration soit obtenu à partir du rétentat (7) dans la chambre de filtration (3) ;
E) le pressage du gâteau de filtration en un granulé (16) par alimentation de la chambre de filtration (3) en une pression principale et le retrait du granulé (16) de la chambre de filtration (3).

2. Procédé selon la revendication 1, **caractérisé en ce que** le liquide (10) chargé en particules présente une teneur en particules d'au moins 10 %, de préférence d'au moins 12 %, le plus préférentiellement d'au moins 15%, en particulier **en ce que** la teneur en particules dans le liquide (10) chargé en particules avant le filtre-presse (1) a été augmentée au moyen d'une pompe de filtration à membrane oscillante.

3. Procédé selon l'une quelconque des revendications précédentes, **caractérisé en ce que** les étapes de procédé A) à C) sont réalisées dans leur ordre au moins 10 fois, de préférence au moins 20 fois, le plus préférentiellement au moins 30 fois.

4. Procédé selon l'une quelconque des revendications précédentes, **caractérisé en ce que** le rinçage à contre-courant de perméat (11) est effectué par impulsions, de préférence par alimentation de la conduite d'évacuation (5) en air comprimé, en particulier en une impulsion d'air comprimé et/ou
**en ce que** la conduite d'évacuation (5) est bloquée avant le rinçage à contre-courant au moyen d'une soupape (18), dans lequel l'air comprimé est de préférence insufflé dans la conduite d'évacuation (5) entre la chambre de filtration (3) et la soupape (18).

5. Procédé selon l'une quelconque des revendications précédentes, **caractérisé en ce que** le liquide (10) chargé en particules est introduit par le biais d'au moins deux entrées dans la chambre de filtration (3), dans lequel les entrées sont de préférence agencées à l'opposé, et/ou **en ce que** le perméat (11) est évacué par le biais d'au moins deux sorties de la chambre de filtration (3), dans lequel les sorties sont de préférence agencées à l'opposé.

6. Procédé selon l'une quelconque des revendications précédentes, **caractérisé en ce que** le gâteau de filtration présente au moins une épaisseur de 10 mm, de préférence une épaisseur d'au moins 20 mm, le plus préférentiellement une épaisseur d'au moins 30 mm et/ou **en ce que** l'épaisseur du gâteau de filtration est mesurée ou déterminée, en particulier par le biais d'une pression antagoniste lors de l'alimentation de la chambre de filtration (3) en une prépression, et/ou **en ce qu'**une humidité relative du granulé (16) après le pressage dans l'étape de procédé E) est inférieure ou égale à 25 %.

7. Procédé selon l'une quelconque des revendications précédentes, **caractérisé en ce qu'** avant le retrait du granulé (16) de la chambre de filtration (3), celle-ci est alimentée en particulier par le biais de la conduite d'alimentation (6) en air comprimé, en particulier pendant une durée d'au moins 10 secondes, de préférence d'au moins 20 secondes, le plus préférentiellement d'au moins 30 secondes.

8. Procédé selon l'une quelconque des revendications précédentes, **caractérisé en ce que** l'alimentation de la chambre de filtration (3) en prépression et pression principale est effectuée au moyen d'un dispositif de pressage sous la forme d'au moins un cylindre de pressage (4) en particulier au moyen d'un cylindre de pressage (4) pneumatique ou hydraulique, dans lequel l'alimentation est de préférence effectuée au moyen de son dispositif de pressage sous la forme d'au moins deux cylindres de pressage (4) qui sont de préférence agencés à l'opposé.

9. Filtre-presse (1) pour la fabrication de granulés (16) à partir d'un liquide (10) chargé en particules, en particulier pour la mise en œuvre d'un procédé selon l'une quelconque des revendications 1 à 8,
avec une chambre de filtration (3),
avec au moins une conduite d'alimentation (6) pour l'alimentation d'un liquide (10) chargé en particules dans la chambre de filtration (3) ;
avec au moins une conduite d'évacuation (5) pour l'évacuation d'un perméat (11) de la chambre de filtration (3),
dans lequel la chambre de filtration (3) comprend un tissu filtrant (8) qui est agencé avant la conduite d'évacuation (5) et
avec un dispositif de pressage pour l'alimentation de la chambre de filtration (3) en une pression,
**caractérisé en ce que**
un dispositif de rinçage à contre-courant de perméat (11) dans la chambre de filtration (3) est agencé dans la conduite d'évacuation (5) ou est relié activement à la conduite d'évacuation (5).

10. Filtre-presse (1) selon la revendication 9, **caractérisé en ce que** le dispositif de rinçage à contre-courant est formé par un raccord (14) pour l'air comprimé, par le biais duquel la conduite d'évacuation (5) peut être alimentée en air comprimé et/ou **en ce que** le dispositif de rinçage à contre-courant comprend une soupape (18) pour le blocage de la conduite d'évacuation (5), dans lequel le raccord (14) pour l'air comprimé est de préférence agencé entre la chambre de filtration (3) et la soupape (18).

11. Filtre-presse (1) selon l'une quelconque des revendications 9 ou 10, **caractérisé en ce que** le dispositif de pressage est formé par au moins un cylindre de pressage (4), de préférence par deux cylindres de pressage (4) qui sont agencés sur des côtés opposés de la chambre de filtration (3).

12. Filtre-presse (1) selon la revendication 11, **caractérisé en ce que** le cylindre de pressage (4) est un cylindre de pressage pneumatique et/ou hydraulique.

13. Filtre-presse (1) selon l'une quelconque des revendications 9 à 12, **caractérisé en ce que** la chambre de filtration (3) présente au moins deux entrées pour l'introduction du liquide (10) chargé en particules et/ou présente au moins deux sorties pour l'évacuation du perméat (11).

14. Installation de fabrication de granulés (16) comprenant au moins deux, de préférence au moins cinq, le plus préférentiellement au moins dix, au plus de préférence au moins vingt filtre-presses (1) selon l'une quelconque des revendications 9 à 13.

15. Installation selon la revendication 14, **caractérisée en ce que** l'installation pour respectivement deux filtre-presses (1) comprend un double module, de préférence deux doubles modules d'une pompe de filtration à membrane oscillante qui alimente les filtre-presses (1) en un liquide (10) chargé en particules.
